(19) Europäisches Patentamt
European Patent Office
Office européen des brevets

(11) **EP 4 566 737 A1**

(12) **EUROPEAN PATENT APPLICATION**
published in accordance with Art. 153(4) EPC

(43) Date of publication:
**11.06.2025 Bulletin 2025/24**

(21) Application number: **23867946.8**

(22) Date of filing: **22.08.2023**

(51) International Patent Classification (IPC):
**B21D 22/00** (2006.01)    **G01N 3/00** (2006.01)
**G06F 30/10** (2020.01)    **G06F 30/20** (2020.01)
**G06F 30/23** (2020.01)    **G06F 113/22** (2020.01)

(52) Cooperative Patent Classification (CPC):
**B21D 22/00; G01N 3/00; G06F 30/10; G06F 30/20;
G06F 30/23;** G06F 2113/22

(86) International application number:
**PCT/JP2023/030150**

(87) International publication number:
**WO 2024/062822 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.09.2022 JP 2022150894
07.06.2023 JP 2023093654**

(71) Applicant: **JFE Steel Corporation
Tokyo 100-0011 (JP)**

(72) Inventor: **KARIYAZAKI, Yuta
Tokyo 100-0011 (JP)**

(74) Representative: **Hoffmann Eitle
Patent- und Rechtsanwälte PartmbB
Arabellastraße 30
81925 München (DE)**

(54) **PRESS FORMING FRACTURE DETERMINATION METHOD, DEVICE AND PROGRAM, AND METHOD FOR MANUFACTURING PRESS FORMED PART**

(57)     A press forming fracture judgment method according to the present invention acquires a forming limit of a metal sheet which limit is expressed by a relationship between a maximum principal strain and a minimum principal strain of a test piece 100 bulge formed at various bending deformation degrees and a bending deformation degree (P1), and determines presence or absence of fracture generation in a press formed part based on the acquired forming limit of the metal sheet and the maximum principal strain, the minimum principal strain, and the bending deformation degree which are calculated for a press formed part (P3).

FIG.1

**Description**

Field

The present invention relates to a press forming fracture judgment method, device, and program of judging whether a press formed part acquired by press forming of a metal sheet is fractured in consideration of an influence of a bending deformation. Furthermore, the present invention relates to a press formed part manufacturing method of adjusting a press forming condition in such a manner as to control fracture generation based on a result of judgment of presence or absence of the fracture generation and manufacturing a press formed part. Background

A metal sheet used as a material of an automotive body is mostly processed into an automotive part by press forming. Formability of press forming of the automotive part varies depending on a shape of the automotive part, and is also greatly influenced by a material property including ductility of the metal sheet such as a steel sheet that is the material. In addition, in response to a demand for weight reduction of an automotive body in recent years, strength enhancement of a metal sheet such as a steel sheet used for an automotive part is in progress. However, as the ductility decreases along with the strength enhancement of the metal sheet, a fracture is likely to be generated in press forming, and formability of press forming is deteriorated.

Thus, in order to avoid a trouble such as generation of the fracture during mass production of the automotive part by press forming, die design based on prior prediction of the formability of press forming by computer aided engineering (CAE) is important. Furthermore, in order to accurately perform the prior prediction of the fracture generation in press forming, importance of a technology of accurately determining a forming limit of the metal sheet such as the steel sheet is increased.

A forming limit diagram (hereinafter, referred to as "FLD") is usually used to judge the forming limit of the metal sheet. The FLD is created by measurement of the forming limit in each of deformation forms (equibiaxial deformation, non-equibiaxial deformation, plane strain deformation, and uniaxial deformation) in press forming by a forming test on a laboratory scale. Then, in the creation of the forming limit diagram, a deformation ratio in a major axis direction and a minor axis direction of a test piece is changed by changing of a width of the test piece to some levels and a strain in each of the major axis direction and the minor axis direction at the time of fracture generation in the test piece is measured.

Generally, in press forming of the metal sheet, a process in which the metal sheet is uniformly deformed transitions to a process in which strain concentrates on a specific place. In this process, a thickness reduction called necking is generated at a portion where the strain of the metal sheet is concentrated, and the fracture is generated after the sheet thickness reduction proceeds. Since generation of the necking causes a product defect in press forming, definition with a strain amount immediately before generation of the necking is necessary in an FLD used for prior prediction of the product defect in a press formed part. Furthermore, in a high-strength steel sheet having a tensile strength exceeding 980 MPa, the necking is generated at a low strain amount of about 10%, and the fracture is generated immediately thereafter. Thus, a method of accurately judging a forming limit has been proposed.

A method of acquiring a forming limit curve (hereinafter, referred to as "FLC") of a metal sheet is standardized in ISO12004 (Non-Patent Literature 1). In this method, first, a strain distribution (strain deformation) in a vicinity of a fracture generated portion of a test piece subjected to bulge forming up to the fracture is measured, and a maximum value of an approximation curve of the measured strain distribution is acquired as a forming limit strain.

However, in the method defined in IS12004, the strain at the fracture generated portion cannot be sufficiently approximated and the forming limit strain cannot be acquired in some cases. Thus, Non-Patent Literature 2 proposes, as a method of improving ISO12004, a method of continuously measuring a strain generated in a test piece during forming, and acquiring an FLC from a temporal change in a strain of a fracture generated portion.

Citation List

Non Patent Literature

Non Patent Literature 1: ISO 12004-2: 2008, Metallic materials-Sheet and strip-Determination of forming-limit curves, 2008.
Non Patent Literature 2: W Hotz, M Merklein et al., "Time Dependent FLC Determination Comparison of Different Algorithms to Detect the Onset of Unstable Necking before Fracture", Key Engineering Materials, Vol 549, pp. 397-404 (2013).

Summary

Technical Problem

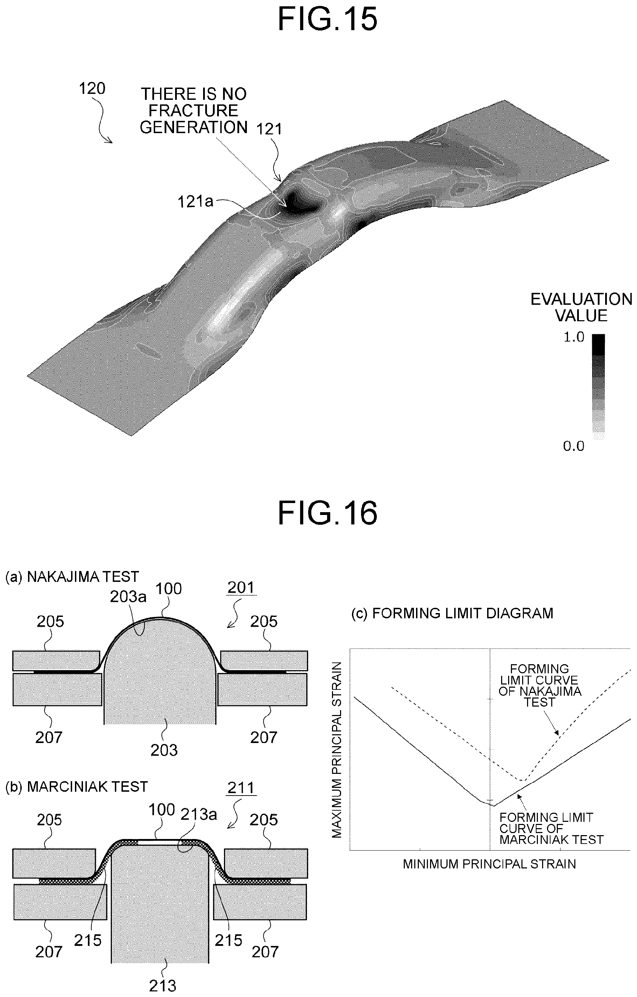

As test methods of acquiring a forming limit curve, two methods that are Nakajima test and Marciniak test are defined in ISO12004. As illustrated in FIG. 16(a), the Nakajima test is a method of acquiring a forming limit by a bulge test in which bulge forming of a test piece 100 is performed with a molding die 201 including a hemispherical punch 203, an upper die 205, and a blank holder 207. On the other hand, as illustrated in FIG. 16(b), in the Marciniak test, a molding die 211 including a flat punch 213, an upper die 205, and a blank holder 207 is used. Then, in the Marciniak test, a forming limit is acquired by a bulge test in which bulge forming of a test piece 100 is performed with a driver sheet (driver test) 215 being interposed between the flat punch 213 and the test piece 100.

In the Nakajima test, bulge forming is performed in a state in which the test piece 100 is fitted to a shape of a tip portion 203a of the hemispherical punch 203. Thus, the acquired forming limit (maximum principal strain and minimum principal strain at the fracture) is influenced by bending deformation of the test piece 100. On the other hand, in the Marciniak test, the bulge forming is performed with the flat punch 213 having a tip portion 213a with a flat surface. Thus, bending deformation of the test piece 100 is not caused and the acquired forming limit is not influenced by the bending deformation of the test piece 100.

In addition, in general, when the FLD acquired by the Nakajima test is compared with the FLD acquired by the Marciniak test, the strain amount immediately before generation of the necking is larger in the FLD acquired by the Nakajima test by about 1 to 2% as illustrated in FIG. 16(c). In press forming of a high-strength material having low ductility (such as a high-tensile steel sheet or the like), a slight difference in the strain amount may cause a difference in necking generation. Thus, the forming limit has been evaluated by comparison between the FLD of the Nakajima test and that of the Marciniak test from a strain amount measured in an actual press formed part and a strain amount acquired from a press forming analysis result using CAE.

However, in the Nakajima test, even under a press forming condition in which it is predicted from the strain amount acquired by the press forming analysis that no fracture is generated, there is a case where a fracture is generated in an actual press formed part of a metal sheet, specifically in an actual press formed part of a high-strength steel sheet of 980 MPa or more. In addition, in the Marciniak test, even under a press forming condition in which a fracture is predicted to be generated, there is a case where no fracture is generated in an actual press formed part. As described above, there have been many cases where there is a large deviation between a prediction result of presence or absence of fracture generation, which prediction result is based on the FLD, and presence or absence of fracture generation in the actual press formed part, and there have been problems.

On the other hand, the method proposed in Non-Patent Literature 2 can accurately acquire the forming limit as compared with ISO12004. However, similarly to ISO12004, the forming limit cannot be acquired in consideration of a degree of bending deformation. Thus, a result of prediction of presence or absence of fracture generation based on the forming limit diagram acquired by the method proposed in Non-Patent Literature 2 does not coincide with presence or absence of fracture generation in an actual press formed part in some cases.

As described above, in the actual press forming, a portion subjected to the bending deformation and a portion not subjected thereto are mixed, and a degree of the bending deformation varies depending on the portion. However, the degree of the bending deformation is not taken into consideration in the conventional method of acquiring the FLD. Thus, there is a case where it is not possible to appropriately judge presence or absence of fracture generation by using the conventional FLD for the press formed part in which the portion subjected to bending deformation and the portion not subjected thereto are mixed. Furthermore, there has been a demand for a technology of previously judging presence or absence of fracture generation in a press formed part having the portion subjected to the bending deformation, and controlling the fracture generation in the press formed part based on a result of the judgment.

The present invention has been made to solve the above problems, and an object thereof is to provide a press forming fracture judgment method, device, and program of judging a forming limit of a press formed part based on a forming limit of a metal sheet which limit is acquired in consideration of an influence of bending deformation. Furthermore, another object of the present invention is to provide a press formed part manufacturing method of adjusting a press forming condition of a press formed part in such a manner that it is judged that no fracture is generated by the press forming fracture judgment method, and manufacturing a press formed part under the adjusted press forming condition.

Solution to Problem

A press forming fracture judgment method according to the present invention judges presence or absence of fracture generation in a press formed part acquired by press forming of a metal sheet, and includes: a forming limit acquisition process; and a press formed part fracture judgment process, wherein the forming limit acquisition process includes forming the metal sheet at various bending deformation degrees, and acquiring a forming limit of the metal sheet which limit is expressed by a relationship between a bending deformation degree of the formed metal sheet and a maximum principal strain and a minimum principal strain of the metal sheet formed at the bending deformation degree, and

the press formed part fracture judgment process includes acquiring, as fracture judgment parameters in the press formed part, a maximum principal strain and a minimum principal strain in the press formed part and a curvature in a maximum principal strain direction as a bending deformation degree in the press formed part, and judging presence or absence of fracture generation in the press formed part based on the acquired fracture judgment parameters and the forming limit acquired in the forming limit acquisition process.

In the press formed part fracture judgment process, the bending deformation degree in the press formed part may be calculated by a following expression.

$$\rho = (\varepsilon_{1,\ outer} - \varepsilon_{1,\ inner})/t$$

where

$\rho$: bending deformation degree
$\varepsilon_{1,\ outer}$: maximum principal strain on an outer side of bending
$\varepsilon_{1,\ inner}$: maximum principal strain on an inner side of bending
t: sheet thickness

In the press formed part fracture judgment process, the bending deformation degree in the press formed part may be set as a maximum principal curvature.

The metal sheet in the forming limit acquisition process may be collected from a metal material used as a blank of the press formed part in which presence or absence of the fracture generation is judged in the press formed part fracture judgment process.

A press forming fracture judgment device according to the present invention judges presence or absence of fracture generation in a press formed part acquired by press forming of a metal sheet, and includes: a forming limit acquisition unit; and a press formed part fracture judgment unit, wherein the forming limit acquisition unit is configured to acquire a forming limit of the metal sheet which limit is expressed by a relationship between a bending deformation degree of the metal sheet formed at various bending deformation degrees and a maximum principal strain and a minimum principal strain of the metal sheet formed at the bending deformation degree, and the press formed part fracture judgment unit is configured to calculate, as fracture judgment parameters in the press formed part, a maximum principal strain and a minimum principal strain in the press formed part and a curvature in a maximum principal strain direction as a bending deformation degree in the press formed part, and judge presence or absence of fracture generation in the press formed part based on the calculated fracture judgment parameters and the forming limit acquired by the forming limit acquisition unit.

A press forming fracture judgment program according to the present invention judges presence or absence of fracture generation in a press formed part acquired by press forming of a metal sheet, and causes a computer to function as a forming limit acquisition unit, and a press formed part fracture judgment unit, wherein the forming limit acquisition unit is configured to acquire a forming limit of the metal sheet which limit is expressed by a relationship between a bending deformation degree of the metal sheet formed at various bending deformation degrees and a maximum principal strain and a minimum principal strain of the metal sheet formed at the bending deformation degree, and the press formed part fracture judgment unit is configured to calculate, as fracture judgment parameters in the press formed part, a maximum principal strain and a minimum principal strain in the press formed part and a curvature in a maximum principal strain direction as a bending deformation degree in the press formed part, and judge presence or absence of fracture generation in the press formed part based on the calculated fracture judgment parameters and the forming limit acquired by the forming limit acquisition unit.

A press formed part manufacturing method according to the present invention includes: judging presence or absence of fracture generation in a press formed part acquired by press forming of a metal sheet by the press forming fracture judgment method according to the present invention; and manufacturing a press formed part in which the fracture generation in the press forming is controlled based on a result of the judgment, wherein the press formed part manufacturing method includes: a press forming condition adjustment process of adjusting a press forming condition of the press formed part until it is judged that there is no fracture generation in a case where it is judged in the press formed part fracture judgment process of the press forming fracture judgment method that there is the fracture generation, and repeatedly performing the press formed part fracture judgment process; and a press formed part manufacturing process of manufacturing the press formed part under the press forming condition adjusted in the press forming condition adjustment process in such a manner that it is judged that there is no fracture generation in the press formed part fracture judgment process.

Advantageous Effects of Invention

In the present invention, a metal sheet is formed at various bending deformation degrees, and a forming limit of the metal sheet which limit is represented by a relationship between a bending deformation degree of the formed metal sheet and a maximum principal strain and a minimum principal strain of the metal sheet formed at the bending deformation degree is acquired. In addition, the maximum principal strain and the minimum principal strain in the press formed part acquired by press forming of the metal sheet, and a curvature in a maximum principal strain direction as the bending deformation degree in the press formed part are acquired as fracture judgment parameters in the press formed part. Then, based on the acquired fracture judgment parameters and forming limit, it is possible to determine presence or absence of the fracture generation in the press formed part in consideration of the influence of the bending deformation degree.

In addition, in the present invention, the presence or absence of the fracture generation is judged in consideration of the influence of the bending deformation degree with respect to the press formed part acquired by press forming of the metal sheet, and a press forming condition such as a change in a shape of the metal sheet and correction of a die are adjusted based on a result of the judgment in such a manner as to control the fracture generation. As a result, it is possible to significantly shorten a period of determining the press forming condition capable of controlling fracture generation in actual press forming. Furthermore, in the present invention, it is possible to manufacture a press formed part in which the fracture generation is controlled by press forming under the adjusted press forming condition.

Brief Description of Drawings

FIG. 1 is a flowchart illustrating a flow of processing of a press forming fracture judgment method according to a first embodiment of the present invention.

FIG. 2 is a view illustrating an example of a molding die used for bulge forming of a test piece of a metal sheet in the press forming fracture judgment method according to the first embodiment of the present invention.

FIG. 3 is a view illustrating a shape of a punch used for the bulge forming in the first embodiment of the present invention.

FIG. 4 is a view illustrating a shape of a test piece of a metal sheet used for bulge forming in the first embodiment and examples of the present invention.

FIG. 5 is a graph illustrating a forming limit strain acquired for each bending deformation degree in the first embodiment of the present invention.

FIG. 6 is a graph illustrating a result of plotting the forming limit strain acquired for each bending deformation degree and creating a boundary surface of a forming limit which surface is expressed by a relationship between a maximum principal strain, a minimum principal strain, and a bending deformation degree based on the plot in the first embodiment of the present invention.

FIG. 7 is a block diagram illustrating a configuration of a press forming fracture judgment device according to the first embodiment of the present invention.

FIG. 8 is a flowchart illustrating a flow of processing of a press formed part manufacturing method according to a second embodiment of the present invention.

FIG. 9 is a flowchart illustrating specific processing of the press formed part manufacturing method according to the second embodiment of the present invention.

FIG. 10 is a perspective view illustrating a shape of a press formed part to be formed in the example.

FIG. 11 is a contour view of a fracture evaluation value calculated based on a forming limit in the press formed part, which forming limit is acquired by the method according to the present invention, in the example (first invention example).

FIG. 12 is a contour view of a fracture evaluation value calculated based on a forming limit in the press formed part, which forming limit is acquired by the method according to the present invention, in the example (second invention example).

FIG. 13 is a contour view of a fracture evaluation value calculated based on a forming limit strain in the press formed part, which strain is acquired by a conventional forming limit curve, in the example.

FIG. 14 is a contour view of a fracture evaluation value in a press formed part manufactured under a press forming condition, the press forming condition of controlling a fracture being adjusted based on a fracture judgment result according to the first invention example in the press formed part.

FIG. 15 is a contour view of a fracture evaluation value in a press formed part manufactured under a press forming condition, the press forming condition of controlling a fracture being adjusted based on a fracture judgment result according to the second invention example in the press formed part.

FIG. 16 is a view illustrating an example of a molding die and a forming limit diagram used in a conventional forming limit test ((a) Nakajima test, (b) Marciniak test, and (c) forming limit diagram acquired by each of Nakajima test and Marciniak test).

Description of Embodiments

[First embodiment]

<Press forming fracture judgment method>

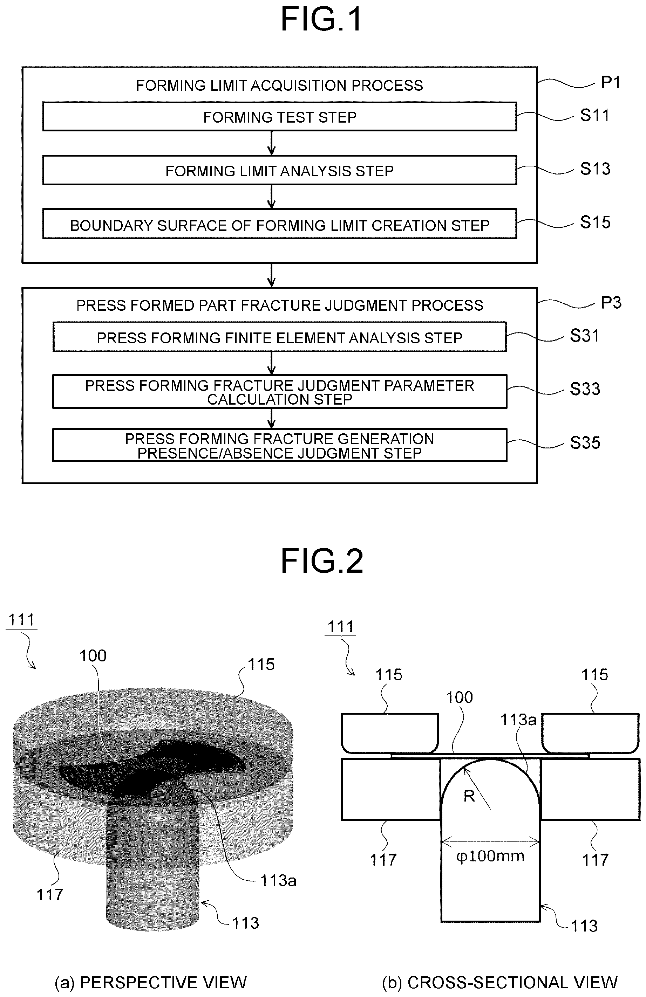

The press forming fracture judgment method according to the first embodiment of the present invention is to determine presence or absence of fracture generation in a press formed part acquired by press forming of a metal sheet, and includes a forming limit acquisition process P1 and a press formed part fracture judgment process P3 as illustrated in FIG. 1.

<<Forming limit acquisition process>>

In the forming limit acquisition process P1, a metal sheet is formed at various bending deformation degrees, and a forming limit of the metal sheet which limit is expressed by a relationship between a bending deformation degree of the formed metal sheet and a maximum principal strain and a minimum principal strain of the metal sheet formed at the bending deformation degree is acquired.

In the present first embodiment, as illustrated as an example in FIG. 2, in the forming limit acquisition process P1, a test piece 100 of the metal sheet is bulge formed at various bending deformation degrees by utilization of a plurality of punches 113 having different curvatures at tip portions 113a. Then, in the forming limit acquisition process P1, a forming limit of the metal sheet which forming limit is expressed by a relationship between a bending deformation degree of the bulge-formed test piece 100 and a maximum principal strain and a minimum principal strain of the test piece 100 bulge formed at the bending deformation degree.

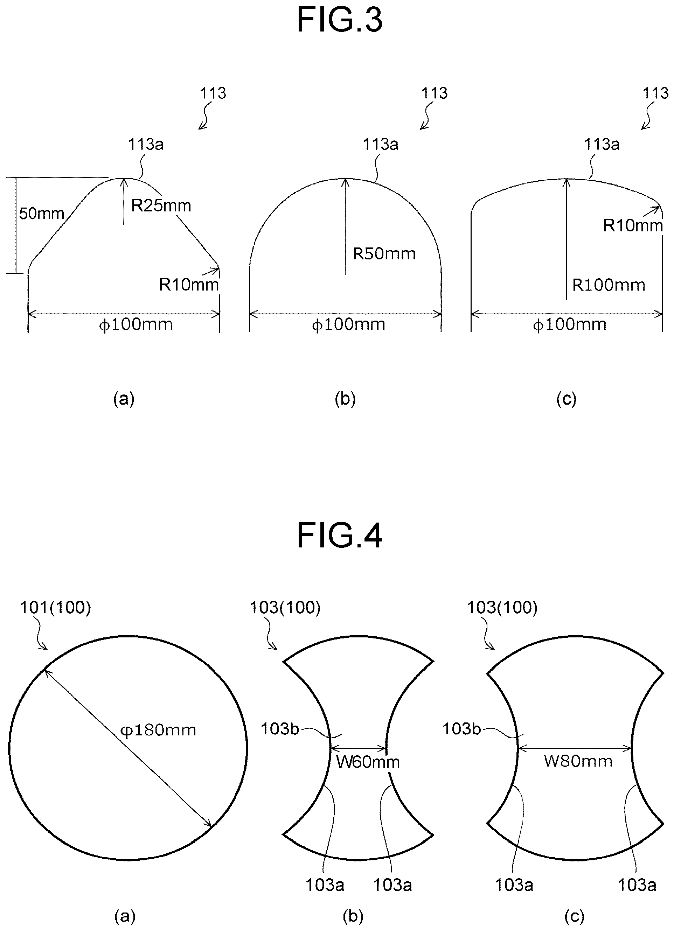

As illustrated in FIG. 3, each of the punches 113 has a spherical surface having a curvature radius R, that is, the tip portion 113a having a curvature $\rho$ (= 1/R) larger than 0. However, in the present invention, the punches 113 include a flat punch 213 having a flat tip portion 213a (curvature radius R = $\infty$ and curvature $\rho$ = 0) as illustrated in FIG. 16(b). Thus, each of the punches 113 according to the present invention has the tip portion 113a having the curvature $\rho$ of 0 or more.

As the test piece 100, a test piece 101 and a test piece 103 having shapes illustrated as examples in FIG. 4 are used to acquire a forming limit in each of deformation forms (equibiaxial deformation, non-equibiaxial deformation, plane strain deformation, and uniaxial deformation) in press forming. As illustrated in FIG. 4(a), the test piece 101 has a disk shape, and is to acquire a forming limit of the equibiaxial deformation. On the other hand, as illustrated in FIGS. 4(b) and (c), in the test piece 103, a cut-out portion 103a having a shape cut out in an arc shape is formed at a position facing a diameter direction of a disk-shaped peripheral edge portion. As for the test piece 103, a width W of a narrowest portion in a central portion 103b is variously changed. As the width W is narrowed, the equibiaxial deformation is changed to the non-equibiaxial deformation and the plane strain deformation, and is gradually brought close to uniaxial tension, and the forming limit in each of the deformation forms is acquired. Furthermore, it is assumed that a mark (predetermined grid or strain measurement pattern) is applied on a surface of the metal sheet in the test piece 100.

The bending deformation degree serving as an index of the forming limit represents a degree of bending deformation in a bulge-formed portion in the test piece 100, and a measured value of a curvature radius or a curvature of the bulge-formed portion can be used as the bending deformation degree. However, in the present first embodiment, the bending deformation degree may be expressed by the curvature of the tip portion 113a of the punch 113 used for the bulge forming of the test piece 100 without actual measurement of the curvature radius or the curvature of the bulge-formed portion.

Furthermore, the method of acquiring the maximum principal strain and the minimum principal strain to be indices of the forming limit is not specifically limited. It is only necessary that the forming limit is acquired on the same basis for the strains measured by utilization of the plurality of punches 113 having the different curvatures at the tip portions 113a. For example, the maximum principal strain and the minimum principal strain at the time of fracture generation may be acquired from a shape of the mark applied on the surface of the test piece 100 in a vicinity of a fracture generated portion of the test piece 100 bulge formed until the fracture is generated, or may be acquired by a method described later.

As a specific aspect of the forming limit acquisition process P1 according to the present first embodiment, as illustrated in FIG. 1, what includes a forming test step S11, a forming limit analysis step S13, and a boundary surface of a forming limit creation step S15 can be described as an example.

(Forming test step)

In the forming test step S11, the test piece 100 in a manner illustrated in FIG. 4 is bulge formed at various bending deformation degrees, a strain generated in the bulge-formed test piece 100 is measured, and a strain database is constructed.

As illustrated in FIG. 3, in the present first embodiment, four types of the punches 113 in which the curvature radii at the tip portions 113a were respectively R 25 mm, R 50 mm, R 100 mm, and R = ∞ (corresponding to the flat punch 213 illustrated in FIG. 16(b)) were prepared. The curvatures at the tip portions 113a (unit: 1/mm) are 0.04, 0.02, 0.01, and 0.00, respectively.

Then, a test piece 100 of a high-strength steel sheet having a tensile strength of 1470 MPa-grade and a sheet thickness of 1.4 mm was used as a test material of a metal sheet, and a shape of the test piece 100 was determined. In the present first embodiment, as illustrated in FIG. 4, shapes of the test piece 100 are the circular test piece 101 having a diameter of φ180 mm and the test piece 103 having a shape cut out in a width direction with the test piece 101 as a basis. Furthermore, the test piece 103 had five types of shapes in which a width W of a central portion 103b was from 25 mm to 160 mm. As examples, a test piece 103 having the width W of 60 mm is illustrated in FIG. 4(b), and a test piece 103 having the width W of 80 mm is illustrated in FIG. 4(c). A gridlike pattern (grid) for strain measurement was transferred to the surface of the test piece 100 having the shapes determined in such a manner.

Then, as illustrated in FIG. 2, a molding die 111 including a punch 113, an upper die 115, and a blank holder 117 was set in a deep drawing testing machine of a hydraulic system, and the test piece 100 was bulge formed. In the present first embodiment, in order to control inflow of the test piece 100, a blank holder pressure of 50 ton was applied as a load by the blank holder 117, and a punch speed of the punch 113 was set to 5 mm/min. Then, while the bulge forming was performed, the surface of the test piece 100 was photographed with an image analysis camera that is a photographing device (not illustrated) installed in an upper portion of the molding die 111.

Subsequently, the photographed image of the surface of the test piece 100 was analyzed in the bulge forming process, and an amount of the strain (maximum principal strain and minimum principal strain) generated on the surface of the test piece 100 was measured. As a method of measuring the amount of strain, digital image correlation (hereinafter, referred to as "DIC") can be suitably used. In the DIC, the surface of the test piece 100 in the bulge forming process is imaged at predetermined time intervals. Then, an image analysis of an image captured in each time step is performed, and the maximum principal strain and the minimum principal strain are measured as the strain generated in the test piece 100 in two in-plane directions according to a deformation degree of the grid applied to the surface of the test piece 100. The strain amounts measured at the time steps in the bulge forming process in such a manner were stored in the strain database in time series.

Then, it was visually judged whether a fracture was generated in the test piece 100 in the bulge forming process. In a case where it was judged that the fracture was not generated, the bulge forming was proceeded, and the photographing of the surface of the test piece 100, the measurement of the strain amount by the image analysis, and the storage into the strain database were repeated. As described above, in the present first embodiment, the surface of the test piece 100 was photographed at predetermined time intervals (such as once/second) from a start of forming to fracture generation, the strain amount was measured for each of the photographed images, and the measurement was continued until it was judged that the fracture was generated.

In a case where it was judged that the fracture was generated, the bulge forming, the measurement of the strain amount, and the storage into the strain database were repeated for the test piece 100 having another shape.

The above operation was performed for each of the shapes of the test piece 100 and the punches 113 having different curvatures at the tip portions 113a, and the strain database in which the strains from the start of forming to the fracture were recorded in time series for each of the bending deformation degrees was constructed.

(Forming limit analysis step)

In the forming limit analysis step S13, the forming limit strain expressed by the maximum principal strain and the minimum principal strain in the fracture generated portion of the test piece 100 is acquired for each of the bending deformation degrees of the test piece 100 based on the strain database constructed in the forming test step S11.

In the present first embodiment, the forming limit strain was acquired as follows. First, from the strain database constructed in the forming test step S11, the maximum principal strain and the minimum principal strain in the vicinity of the fracture generated portion of the test piece 100 from the start of forming to the fracture were extracted for each of the bending deformation degrees for each of the predetermined time steps. Then, time-series data of each of the maximum principal strain and the minimum principal strain extracted for each of the bending deformation degrees was created.

Then, a critical point at which the test piece 100 transitioned from a uniform deformation to an inhomogeneous deformation was determined in the time-series data of each of the maximum principal strain and the minimum principal strain which data was created for each of the bending deformation degrees. Then, it was assumed that necking was generated in the test piece 100 at the critical points of the strains, and the maximum principal strain and the minimum principal strain at that time were acquired as the forming limit strain at the bending deformation degree. As described above, by acquiring the forming limit strain for each of the bending deformation degrees, the forming limit expressed by the relationship between the bending deformation degree, the maximum principal strain, and the minimum principal strain was acquired.

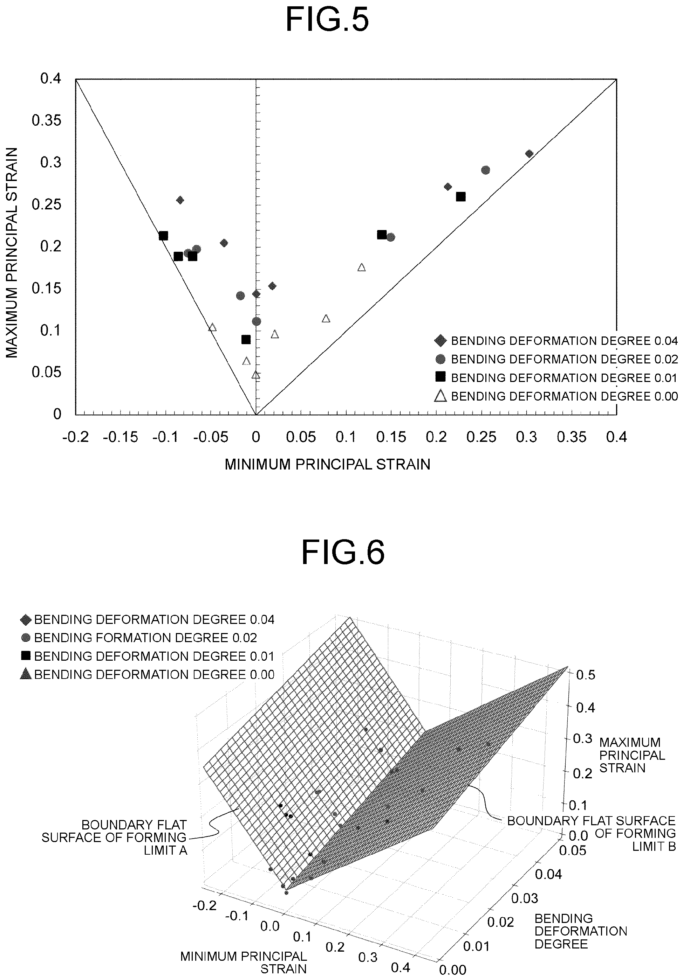

In Table 1, the bending deformation degree is defined as the curvature of the tip portion 113a of the punch 113 used for the bulge forming of the test piece 100 in the present first embodiment, and a value of the forming limit strain acquired for each of the bending deformation degrees is illustrated. Furthermore, a graph in which the forming limit strain is plotted on a two-dimensional coordinate plane having the minimum principal strain and the maximum principal strain as coordinate axes is illustrated in FIG. 5.

Table 1

| Curvature radius of punch | Bending deformation degree (curvature: 1/mm) | Width W | Forming limit strain | |
|---|---|---|---|---|
| | | | Minimum principal strain | Maximum principal strain |
| R = 25 mm | 0.04 | 25 mm | -0.084 | 0.256 |
| | 0.04 | 40 mm | -0.036 | 0.205 |
| | 0.04 | 60 mm | 0.000 | 0.145 |
| | 0.04 | 80 mm | 0.018 | 0.154 |
| | 0.04 | 160 mm | 0.213 | 0.272 |
| | 0.04 | (No cut out) | 0.303 | 0.311 |
| R = 50 mm | 0.02 | 25 mm | -0.075 | 0.193 |
| | 0.02 | 40 mm | -0.066 | 0.198 |
| | 0.02 | 60 mm | -0.018 | 0.143 |
| | 0.02 | 80 mm | 0.000 | 0.112 |
| | 0.02 | 160 mm | 0.149 | 0.212 |
| | 0.02 | (No cut out) | 0.254 | 0.292 |
| R = 100 mm | 0.01 | 25 mm | -0.103 | 0.214 |
| | 0.01 | 40 mm | -0.086 | 0.190 |
| | 0.01 | 60 mm | -0.071 | 0.189 |
| | 0.01 | 80 mm | -0.011 | 0.090 |
| | 0.01 | 160 mm | 0.139 | 0.215 |
| | 0.01 | (No cut out) | 0.227 | 0.260 |
| R = ∞ mm (Flat punch) | 0.00 | 25 mm | -0.048 | 0.105 |
| | 0.00 | 40 mm | -0.011 | 0.065 |
| | 0.00 | 60 mm | 0.000 | 0.048 |
| | 0.00 | 80 mm | 0.021 | 0.097 |
| | 0.00 | 160 mm | 0.078 | 0.115 |
| | 0.00 | (No cut out) | 0.117 | 0.177 |

In the forming limit analysis step according to the present invention, the maximum principal strain and the minimum principal strain at a time point of the fracture generation in the test piece 100 may be acquired as the forming limit strain.

The forming limit strain may be acquired by any method as long as the strain measured in the bulge test using the plurality of punches 113 having the different curvatures at the tip portions 113a is acquired based on the same criterion.

(Boundary surface of a forming limit creation step)

In the boundary surface of a forming limit creation step S15, the forming limit strain acquired for each of the bending deformation degrees in the forming limit analysis step S13 is plotted in a three-dimensional coordinate space having the maximum principal strain, the minimum principal strain, and the bending deformation degree as three axes. Furthermore, in the boundary surface of a forming limit creation step S15, a boundary surface of a forming limit which surface is expressed by the relationship between the maximum principal strain, the minimum principal strain, and the bending deformation degree is created.

As a method of creating the boundary surface of a forming limit in the boundary surface of a forming limit creation step S15, for example, there are the following methods.

In the first method, first, plots of two forming limit strains with equal bending deformation degrees are extracted. Then, in a forming limit strain group of a bending deformation degree different from that of the two forming limit strains, a plot of one forming limit strain having the shortest distance to a line segment connecting the plots of the two forming limit strains is selected. Subsequently, a triangular plane is formed by the two extracted forming limit strain plots and the one selected forming limit strain plot. Such a triangular plane is created for plots of all the forming limit strain groups. Then, a polygonal facet acquired by combination of the created triangular planes is set as the boundary surface of a forming limit.

In the second method, first, a boundary flat surface of a forming limit (boundary flat surface forming limit) or a boundary curved surface of a forming limit is assumed in the three-dimensional coordinate space, and a vertical distance between the assumed boundary flat surface of a forming limit or boundary curved surface of a forming limit and the forming limit strain plot is calculated. Then, the boundary flat surface of a forming limit or the boundary curved surface of a forming limit is determined in such a manner that the square sum of the calculated vertical distance is minimized.

A third method is a method of determining, in the second method, the boundary flat surface of a forming limit or the boundary curved surface of a forming limit in such a manner that the square sum in which the vertical distance between the assumed boundary flat surface of a forming limit or boundary curved surface of a forming limit and the plot of the forming limit strain is weighted is minimized. As a way of weighting, for example, it is preferable to increase the weight for the forming limit of the bending deformation degree at which the fracture is likely to be generated in actual press forming. As a result, it is possible to reduce an error between the determined boundary flat surface of a forming limit or boundary curved surface of a forming limit and the plot of the forming limit strain at the bending deformation degree at which the fracture is likely to be generated in the actual press forming.

In the second method or the third method, a plurality of the boundary flat surfaces of a forming limit and/or boundary curved surfaces of a forming limit may be combined. For example, the boundary flat surface of a forming limit or the boundary curved surface of a forming limit is assumed in each of a negative region and a positive region of the minimum principal strain, and the boundary flat surface of a forming limit or the boundary curved surface of a forming limit may be determined in such a manner that the square sum of the vertical distance to the plot of the forming limit strain is minimized for each of the regions. The same applies to a case where the boundary surface of a forming limit is created in such a manner that the square sum in which the vertical distance to the plot of the forming limit strain is weighted is minimized.

In addition, as a method other than the above, three adjacent points may be selected in the plot of the forming limit strain in the three-dimensional coordinate space, a triangular plane may be generated by connection of the selected three points with straight lines, and a polygonal facet including a plurality of the triangular planes generated in such a manner may be used as the boundary surface of a forming limit.

Alternatively, a forming limit curve may be created based on the forming limit strain for each of the bending deformation degrees, and the boundary surface of a forming limit which surface includes the created forming limit curve may be created for all the bending deformation degrees.

In the present first embodiment, the boundary surface of a forming limit is created based on the second method. First, a boundary flat surface of a forming limit which surface was expressed by the following expression (1) was assumed for each of a negative region and a positive region of the minimum principal strain.

$$ax + by + cz + d = 0 \qquad \cdots (1)$$

Then, coefficients in the expression (1) were determined for each of a boundary flat surface of a forming limit A in which the minimum principal strain was in the negative region and a boundary flat surface of a forming limit B in which the minimum principal strain was in the positive region in such a manner that the square sum of the vertical distance between the assumed boundary surface of a forming limit and a plot of the forming limit strain group of each of the bending deformation degrees was minimized. As described above, the boundary flat surface of a forming limit A and the boundary flat surface of a forming limit B for which the coefficients in the expression (1) were determined were created as the boundary surfaces of a forming limit.

The determined coefficients in the expression (1) for the boundary flat surface of a forming limit A and boundary flat surface of a forming limit B are illustrated in Table 2. Furthermore, the boundary flat surface of a forming limit A and the boundary flat surface of a forming limit B which surfaces were created based on the determined coefficients, and the plot of the forming limit strain for each of the measured bending deformation degrees are illustrated in FIG. 6.

**Table 2**

|  | a | b | c | d |
|---|---|---|---|---|
| Boundary flat surface of forming limit A | -21.27 | 41.69 | -17.82 | 1.00 |

(continued)

|  | a | b | c | d |
|---|---|---|---|---|
| Boundary flat surface of forming limit B | 12.67 | 41.23 | -17.79 | 1.00 |

<<Press formed part fracture judgment process>>

In the press formed part fracture judgment process P3, the maximum principal strain and the minimum principal strain in the press formed part, and a curvature in a maximum principal strain direction as the bending deformation degree in the press formed part are acquired as fracture judgment parameters in the press formed part. Furthermore, in the press formed part fracture judgment process P3, presence or absence of fracture generation in the press formed part is judged based on the acquired fracture judgment parameters and the forming limit acquired in the forming limit acquisition process P1.

As a specific aspect of the press formed part fracture judgment process P3, as illustrated in FIG. 1, there is what includes a press forming finite element analysis step S31, a press forming fracture judgment parameter calculation step S33, and a press forming fracture generation presence/absence judgment step S35.

(Press forming finite element analysis step)

In the press forming finite element analysis step S31, the finite element analysis of a process of press forming of the metal sheet into the press formed part is performed.

By the finite element analysis in the press forming finite element analysis step S31, changes in strain, stress, sheet thickness, and the like generated in the press formed part by press forming of the metal sheet can be acquired for each element or node used in the finite element analysis.

(Press forming fracture judgment parameter calculation step)

In press forming fracture judgment parameter calculation step S33, the maximum principal strain and the minimum principal strain in the press formed part and the bending deformation degree in the press formed part are calculated as the fracture judgment parameters in the press formed part. The maximum principal strain, the minimum principal strain, and the bending deformation degree in the press formed part are calculated based on a result of the finite element analysis in the press forming finite element analysis step S31.

The curvature in the maximum principal strain direction which curvature is the bending deformation degree of the press formed part can be acquired from three points existing in the maximum principal strain direction by specification of the maximum principal strain direction of the press formed part. In this method, the maximum principal strain and the minimum principal strain can be acquired from the result of the finite element analysis of the press formed part as in the related art. However, in a press formed part having a complicated shape, it takes time and effort to specify the maximum principal strain direction. Thus, for example, the bending deformation degree of the press formed part may be simply calculated by any of the following methods.

A first method of calculating the bending deformation degree is a method of calculating the bending deformation degree from the maximum principal strain of each of the front surface and the back surface of the press formed part. A normal deformation state in the press formed part is not only the bending deformation, and is a combination with other deformation states. That is, the deformation state of the press formed part can be said to be a stretch bending state in a broad sense. In the stretch bending deformation, a strain at a portion subjected to tensile deformation acts in a sheet thickness direction at a constant level, and a strain at a portion subjected to the bending deformation has a distribution in the sheet thickness direction. Thus, the bending deformation degree in the press formed part can be expressed by utilization of a strain difference between an outer side of the bending and an inner side of the bending of the portion subjected to the bending deformation.

In general, a strain $\varepsilon$ at a portion subjected to the bending deformation is expressed by the following expression.

$$\varepsilon = \pm t/2r$$

t is the sheet thickness, r is the curvature radius, the strain on the outer side of the bending is positive, and the strain on the inner side of the bending is negative. Since the curvature radius r is a reciprocal of the curvature $\rho$, the following expression is derived from the above expression.

$$\varepsilon_{1,\,outer} - \varepsilon_{1,\,inner} = t/r$$

$$\rho = (\varepsilon_{1,\,outer} - \varepsilon_{1,\,inner})/t$$

where

$\rho$: bending deformation degree
$\varepsilon_{1,\,outer}$: maximum principal strain on the outside of the bending
$\varepsilon_{1,\,inner}$: maximum principal strain on the inner side of the bending
t: sheet thickness
$\varepsilon_{1,\,outer}$ and $\varepsilon_{1,\,inner}$ can be calculated by the finite element analysis of the press formed part.

A second method of calculating the bending deformation degree is a method of calculating a maximum principal curvature, that is, a maximum curvature among the curvatures defined when a cross section of a curved surface is created by a plane including a normal direction at a point existing on the curved surface. Since a curvature in the maximum principal strain direction substantially coincides with the maximum curvature among the geometric curvatures defined on the curved surface, the bending deformation degree may be simply calculated by this method.

(Press forming fracture generation presence/absence judgment step)

In the press forming fracture generation presence/absence judgment step S35, presence or absence of fracture generation in the press formed part is judged. Presence or absence of the fracture generation in the press formed part is judged based on the fracture judgment parameters calculated in the press forming fracture judgment parameter calculation step S33 and the forming limit acquired in the forming limit acquisition process P1.

With respect to a case where the boundary surface of a forming limit is created in the forming limit acquisition process P1 as described above, a specific procedure of judging presence or absence of the fracture generation in the press formed part in the press forming fracture generation presence/absence judgment step S35 will be described below.

First, the fracture judgment parameters in the press formed part which parameters are calculated in the press forming fracture judgment parameter calculation step S33 are plotted on the three-dimensional coordinates on which the boundary surface of a forming limit which surface is created in the boundary surface of a forming limit creation step S15 of the forming limit acquisition process P1 is drawn.

When the plot of the fracture judgment parameter is not located below the boundary surface of a forming limit, that is, when the maximum principal strain of the fracture judgment parameter is equal to or more than the minimum principal strain and the maximum principal strain of the boundary surface of a forming limit, the maximum principal strain corresponding to the bending deformation degree, which principal strains are the fracture judgment parameters, it is judged that the fracture is generated.

On the other hand, when the plot of the fracture judgment parameter is located below the boundary surface of a forming limit, that is, when the maximum principal strain of the fracture judgment parameter is smaller than the minimum principal strain and the maximum principal strain of the boundary surface of a forming limit, the maximum principal strain corresponding to the bending deformation degree, which principal strains are the fracture judgment parameters, it is judged that the fracture is not generated.

As described above, in the press forming fracture judgment method according to the present first embodiment, the test piece 100 of the metal sheet is bulge formed at various bending deformation degrees, and the forming limit of the metal sheet which forming limit is expressed by the relationship of the bending deformation degree in addition to the maximum principal strain and the minimum principal strain of the test piece 100 is acquired. In addition, with respect to the press formed part acquired by press forming of the metal sheet, the maximum principal strain and the minimum principal strain, and the curvature in the maximum principal strain direction as the bending deformation degree are calculated as the fracture judgment parameters. Then, based on the calculated fracture judgment parameters and the acquired forming limit, it is judged whether a fracture is generated in the press formed part. As a result, it is possible to judge presence or absence of the fracture generation in the press formed part in consideration of an influence of the bending deformation degree that has not been considered in the conventional forming limit curve.

The metal sheet in the forming limit acquisition process P1 may be taken from a metal material used as a blank of the press formed part in which presence or absence of the fracture generation is judged in the press formed part fracture judgment process P3. A variation in the metal material used as the blank of the press formed part (for example, a change in a metal structure due to variations in manufacturing conditions such as a hot-rolling condition and annealing condition in a case where the metal material is a steel sheet) influences the fracture generation in the press formed part. Thus, for example, it is preferable to judge presence or absence of the fracture generation in the press formed part by collecting the metal sheet used in the forming test step S11 from the metal material actually used as the blank of the press formed part and acquiring the forming limit before a start of mass production of the press formed part. As a result, it possible to further improve accuracy of prior prediction of the fracture generation in press forming during the mass production.

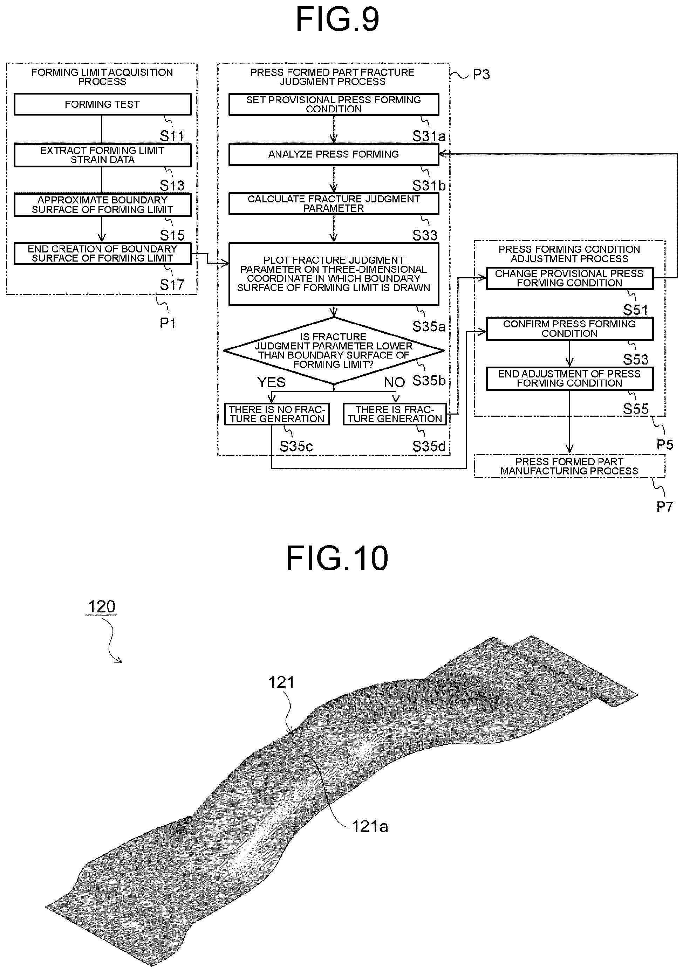

In the above description, as illustrated in FIG. 2, in the forming test step S11, the test piece 100 of the metal sheet is bulge formed at various bending deformation degrees. However, the forming test step is not limited to a step of bulge forming the test piece of the metal sheet, and may be a step of press forming a press formed part 120 imitating an automobile part illustrated in FIG. 10, for example, by using a metal sheet (blank) to which a scribed circle or a grid is transferred. In this case, in the forming test step, the strain database can be constructed by recording of the strain generated in the press formed part from the start of forming to the fracture in time series. Then, the strain (maximum principal strain and minimum principal strain) generated in the press formed part can be acquired from a dimensional change of the scribed circle or the grid in the press formed part. Furthermore, the bending deformation degree can be acquired by measurement of the curvature in the maximum principal strain direction in the actual press formed part.

In addition, in the press forming fracture judgment method according to the present first embodiment, the press forming analysis of the press formed part is performed in the press forming fracture generation presence/absence judgment step S35. Then, the maximum principal strain, the minimum principal strain, and the bending deformation degree (curvature in the maximum principal strain direction) are calculated as the fracture judgment parameters by the press forming analysis.

However, in the present invention, the press formed part fracture generation judgment step may be a step of press forming a press formed part by using the blank to which the scribed circle or the grid is transferred. Then, the maximum principal strain and the minimum principal strain can be acquired from a dimensional change in the scribed circle or the grid in the press formed part. Furthermore, the bending deformation degree can be acquired by measurement of the curvature in the maximum principal strain direction in the actual press formed part.

Examples of a method of simply acquiring the curvature in the maximum principal strain direction in the actual press formed part include measurement using a radius gauge, and calculation from coordinates of three points in the maximum principal strain direction acquired by measurement of a surface profile of the press formed part.

In addition, the judgment of presence or absence of the fracture generation in the press forming fracture generation presence/absence judgment step S35 is performed for each portion of the press formed part for which the fracture judgment parameters are calculated in the press forming fracture judgment parameter calculation step S33. However, the fracture judgment parameters may be calculated only for a portion with a risk of fracture generation in the press formed part, and presence or absence of the fracture generation may be judged for the portion. In this case, the fracture judgment parameters may be calculated for each element used in the press forming analysis, and presence or absence of the fracture generation may be judged for each element of the portion with the risk of the fracture generation in the press formed part.

<Press forming fracture judgment device>

The above description relates to a method of judging presence or absence of the fracture generation in the press formed part. However, the present invention can also be configured as a device that judges presence or absence of the fracture generation.

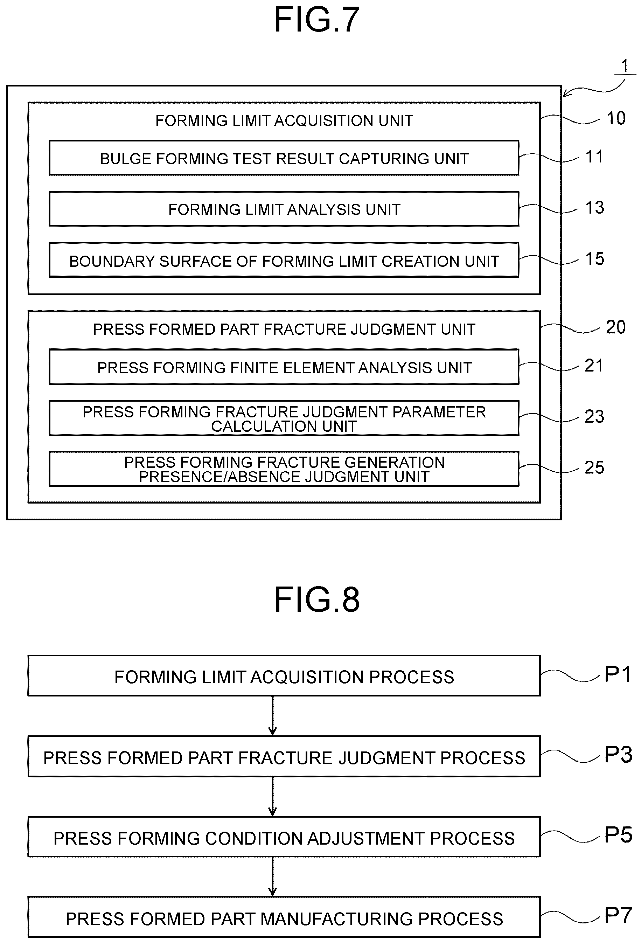

A press forming fracture judgment device according to the first embodiment of the present invention judges presence or absence of fracture generation in a press formed part acquired by press forming of a metal sheet. As illustrated as an example in FIG. 7, a press forming fracture judgment device 1 includes a forming limit acquisition unit 10 and a press formed part fracture judgment unit 20. The press forming fracture judgment device 1 may be configured by a central processing unit (CPU) of a computer (such as a personal computer (PC)). In this case, each of the above units functions when the CPU of the computer executes a predetermined program.

<<Forming limit acquisition unit>>

The forming limit acquisition unit 10 acquires a forming limit of the metal sheet which limit is expressed by a relationship between a bending deformation degree of the metal sheet formed at various bending deformation degrees and a maximum principal strain and a minimum principal strain of the metal sheet formed at the bending deformation degree.

In the present first embodiment, as illustrated in FIG. 7, the forming limit acquisition unit 10 includes a bulge forming test result capturing unit 11, a forming limit analysis unit 13, and a boundary surface of forming limit creation unit 15.

(Bulge forming test result capturing unit)

As illustrated in FIG. 2 described above, the bulge forming test result capturing unit 11 captures a bulge forming test result acquired by measurement of the strain, which is generated in the test piece 100 of the metal sheet bulge formed at various bending deformation degrees, for each of the bending deformation degrees.

An example of a specific configuration of the bulge forming test result capturing unit 11 includes a molding die, a photographing device, a strain measurement device, and a strain database construction device (not illustrated).

The molding die is to perform bulge forming of the test piece 100 at various bending deformation degrees, and examples thereof include a molding die 111 including a plurality of punches 113 having different curvatures at tip portions 113a, an upper die 115, and a blank holder 117 as illustrated in FIG. 2.

The photographing device photographs a degree of deformation of a grid or a strain analysis pattern on a surface of the test piece 100 in the process of bulge forming the test piece 100, to which the grid or the strain analysis pattern is applied, with the molding die 111. As the photographing device, for example, what includes two cameras, and performs stereo photography of the surface of the test piece 100 can be described as an example.

The strain measurement device analyzes an image of the surface of the test piece 100 photographed by the photographing device, and measures a strain generated in the test piece 100 for each of the bending deformation degrees of the bulge-formed test piece 100. Examples of the strain measurement device include what uses the digital image correlation and measures the maximum principal strain and the minimum principal strain as the strains generated in the test piece 100 in two in-plane directions in the bulge forming process.

The strain database construction device constructs a strain database in which the strains measured by the strain measurement device can be stored and extracted in time series from a start of forming to a fracture for each of the bending deformation degrees of the bulge-formed test piece 100.

(Forming limit analysis unit)

The forming limit analysis unit 13 acquires the forming limit strain expressed by the maximum principal strain and the minimum principal strain at the fracture generated portion of the test piece 100 for each of the bending deformation degrees of the test piece 100 based on the bulge forming test result captured by the bulge forming test result capturing unit 11. Examples of the forming limit analysis unit 13 include what includes a strain distribution extraction device and a forming limit acquisition device.

The strain distribution extraction device extracts a strain distribution in the vicinity of the fracture generated portion of the test piece 100 from the strain database constructed by the strain database construction device for each of the bending deformation degrees of the bulge-formed test piece 100.

The forming limit acquisition device acquires the forming limit strain expressed by the maximum principal strain and the minimum principal strain at the fracture generated portion of the test piece 100 for each of the bending deformation degrees of the test piece 100 from the strain distribution extracted by the strain distribution extraction device.

The method of calculating the forming limit strain by the forming limit analysis unit 13 can be a method similar to the forming limit analysis step according to the first embodiment described above.

(Boundary surface of forming limit creation unit)

The boundary surface of forming limit creation unit 15 plots the forming limit strain acquired for each of the bending deformation degrees by the forming limit analysis unit 13 in a three-dimensional coordinate space having the maximum principal strain, the minimum principal strain, and the bending deformation degree as three axes. Furthermore, the boundary surface of forming limit creation unit 15 creates the boundary surface of a forming limit which surface is expressed by the relationship between the maximum principal strain, the minimum principal strain, and the bending deformation degree.

The boundary surface of a forming limit can be created by the boundary surface of forming limit creation unit 15 by any of the methods described in the boundary surface of a forming limit creation step S15 of the press forming fracture judgment method according to the present first embodiment described above.

<<Press formed part fracture judgment unit>>

The press formed part fracture judgment unit 20 performs the press forming analysis of the press formed part, and acquires, as the fracture judgment parameters, the maximum principal strain and the minimum principal strain in the press formed part, and the curvature in the maximum principal strain direction as the bending deformation degree in the press formed part. Then, the press formed part fracture judgment unit 20 judges presence or absence of the fracture generation in the press formed part based on the acquired fracture judgment parameters and the forming limit acquired by the forming limit acquisition unit 10.

As a specific aspect of the press formed part fracture judgment unit 20, as illustrated in FIG. 7, what includes a press forming finite element analysis unit 21, a press forming fracture judgment parameter calculation unit 23, and a press forming fracture generation presence/absence judgment unit 25 can be an example.

(Press forming finite element analysis unit)

The press forming finite element analysis unit 21 performs the finite element analysis of the process of press forming the metal sheet into the press formed part.

By the finite element analysis by the press forming finite element analysis unit 21, changes in a strain, stress, sheet thickness, and the like generated in the press formed part by press forming of the metal sheet can be acquired for each element or node used for the finite element analysis.

(Press forming fracture judgment parameter calculation unit)

The press forming fracture judgment parameter calculation unit 23 calculates the maximum principal strain and the minimum principal strain in the press formed part and the bending deformation degree as the fracture judgment parameters in the press formed part.

The maximum principal strain, the minimum principal strain, and the bending deformation degree in the press formed part are calculated based on a finite element analysis result acquired by the press forming finite element analysis unit 21. Then, the calculation of the bending deformation degree may be performed by a method similar to the press forming fracture judgment parameter calculation step S33 of the press forming fracture judgment method according to the present first embodiment described above.

(Press forming fracture generation presence/absence judgment unit)

The press forming fracture generation presence/absence judgment unit 25 judges presence or absence of the fracture generation in the press formed part based on the fracture judgment parameters calculated by the press forming fracture judgment parameter calculation unit 23 and the forming limit acquired by the forming limit acquisition unit 10.

The judgment of presence or absence of the fracture generation in the press formed part by the press forming fracture generation presence/absence judgment unit 25 may be performed in a manner similar to the press forming fracture generation presence/absence judgment step S35 of the press forming fracture judgment method according to the present first embodiment described above.

<Press forming fracture judgment program>

The first embodiment of the present invention can be configured as a press forming fracture judgment program that causes the press forming fracture judgment device including the computer to function. That is, the press forming fracture judgment program according to the present first embodiment judges presence or absence of fracture generation in a press formed part acquired by press forming of a metal sheet. The press forming fracture judgment program causes the computer to function as the forming limit acquisition unit 10 and the press formed part fracture judgment unit 20 as illustrated as the example in FIG. 7.

The press forming fracture judgment program according to the present first embodiment causes the forming limit acquisition unit 10 to function as the bulge forming test result capturing unit 11, the forming limit analysis unit 13, and the boundary surface of forming limit creation unit 15. In this case, as an example, the bulge forming test result capturing unit 11 captures the strain database in the strain database construction device which database is constructed by the bulge forming test in which the test piece of the metal sheet is bulge formed at various bending deformation degrees.

Furthermore, the press forming fracture judgment program according to the present first embodiment causes the press formed part fracture judgment unit 20 to function as the press forming finite element analysis unit 21, the press forming fracture judgment parameter calculation unit 23, and the press forming fracture generation presence/absence judgment unit 25.

As described above, the press forming fracture judgment device and the press forming fracture judgment program according to the present first embodiment acquire the forming limit of the metal sheet which limit is expressed by the relationship of the bending deformation degree in addition to the maximum principal strain and the minimum principal strain. In addition, with respect to the press formed part acquired by press forming of the metal sheet, the maximum principal strain and the minimum principal strain, and the curvature in the maximum principal strain direction as the bending deformation degree are calculated as the fracture judgment parameters in the press formed part. Then, based on the calculated fracture judgment parameters and the acquired forming limit, it is possible to judge presence or absence of the fracture generation in the press formed part in consideration of the influence of the bending deformation degree.

The bulge forming test result capturing unit may include a strain database capturing unit (not illustrated) that captures a previously constructed strain database instead of what includes the molding die, the photographing device, the strain measurement device, and the strain database construction device as described above. In this case, the boundary surface of a forming limit may be created by the above-described forming limit analysis unit and boundary surface of forming limit creation unit based on the strain database captured by the strain database capturing unit.

Alternatively, in a case where the boundary surface of a forming limit which surface is expressed by the relationship between the bending deformation degree and the maximum principal strain and the minimum principal strain is created in advance, in the press forming fracture judgment device and program according to the present invention, the forming limit acquisition unit may acquire the boundary surface of a forming limit which surface is created in advance.

In the above description, the forming limit acquisition unit acquires the forming limit acquired by the bulge forming test in which the test piece of the metal sheet is bulge formed at various bending deformation degrees. However, in the present invention, the forming limit acquisition unit may acquire a forming limit acquired by press forming of a metal sheet (blank) to which a scribed circle or a grid is transferred into a press formed part.

[Second embodiment]

<Press formed part manufacturing method>

In a press formed part manufacturing method according to the second embodiment of the present invention, presence or absence of fracture generation in a press formed part acquired by press forming of a metal sheet is judged, and a press formed part in which the fracture generation in the press forming is controlled based on a result of the judgment. In the press formed part manufacturing method according to the present second embodiment, judgment of presence or absence of the fracture generation in the press formed part acquired by press forming of the metal sheet is performed by the press forming fracture judgment method according to the first embodiment of the present invention described above.

As illustrated in FIG. 8, the press formed part manufacturing method according to the present second embodiment includes a forming limit acquisition process P1, a press formed part fracture judgment process P3, a press forming condition adjustment process P5, and a press formed part manufacturing process P7. Hereinafter, specific processing in the press formed part manufacturing method according to the present second embodiment will be described with reference to FIG. 9.

<<Forming limit acquisition process>>

In the forming limit acquisition process P1, similarly to the present first embodiment described above, a test piece of a metal sheet is bulge formed at various bending deformation degrees, and a forming limit of a metal sheet which limit is expressed by a relationship between a bending deformation degree of the test piece and a maximum principal strain and a minimum principal strain generated in the test piece is acquired.

In the forming limit acquisition process P1, first, a test piece 100 illustrated in FIG. 4 is bulge formed at various bending deformation degrees, a strain generated in the bulge-formed test piece 100 is measured, and a strain database is constructed (S11).

Then, based on the constructed strain database, a forming limit strain expressed by a maximum principal strain and a minimum principal strain at a fracture generated portion of the test piece 100 is extracted for each of the bending deformation degrees of the test piece 100 (S13).

Subsequently, the forming limit strain acquired for each of the bending deformation degrees is plotted in a three-dimensional coordinate space having the maximum principal strain, the minimum principal strain, and the bending deformation degree as three axes, and a boundary surface of a forming limit which surface is expressed by a relationship between the maximum principal strain, the minimum principal strain, and the bending deformation degree is approximated (S15). As the boundary surface of a forming limit, for example, a boundary flat surface of a forming limit which surface is expressed by the above-described expression (1) may be assumed, and the boundary flat surface of a forming limit in which surface the square sum of a vertical distance to the forming limit strain plot acquired for each of the bending deformation degrees is minimized may be determined.

The test piece 100 of the metal sheet may be collected from a metal material used as a blank of the press formed part to be manufactured. By acquiring a forming limit of the metal material used as the blank of the press formed part to be manufactured and determining the boundary surface of a forming limit, accuracy of prior prediction of the fracture generation in the press formed part can be further improved.

<<Press formed part fracture judgment process>>

Similarly to the first embodiment described above, in the press formed part fracture judgment process P3, presence or absence of the fracture generation in the press formed part is judged based on the fracture judgment parameters calculated for the press formed part and the forming limit acquired in the forming limit acquisition process.

In the press formed part fracture judgment process P3, as illustrated in FIG. 9, first, a provisional press forming condition for press forming the press formed part is set (S31a).

Then, a press forming analysis of a process of press forming the press formed part under the set provisional press forming condition is performed (S31b). Then, the maximum principal strain and the minimum principal strain in the press formed part and the bending deformation degree are calculated as the fracture judgment parameters in the press formed part (S33).

Subsequently, the calculated fracture judgment parameters are plotted on the three-dimensional coordinates on which the boundary surface of a forming limit is drawn with the maximum principal strain, the minimum principal strain, and the bending deformation degree as the coordinate axes (S35a). Then, it is judged whether the plotted fracture judgment parameters are located in a region below the boundary surface of a forming limit (S35b).

In a case where it is judged that the fracture judgment parameters are located below the boundary surface of a forming limit, it is judged that no fracture is generated (S35c). On the other hand, in a case where it is judged that the fracture judgment parameters are not located below the boundary surface of a forming limit, it is judged that the fracture is generated (S35d).

<<Press forming condition adjustment process>>

In the press forming condition adjustment process P5, in a case where it is judged that there is the fracture in the press formed part fracture judgment process P3, the press forming condition of the press formed part is adjusted and the press formed part fracture judgment process P3 is repeatedly performed until it is judged that there is no fracture generation.

First, in the press formed part fracture judgment process P3, in a case where the fracture judgment parameters are not located below the boundary surface of a forming limit (S35b), it is judged that there is the fracture generation (S35d). In this case, in the press forming condition adjustment process P5, the provisional press forming condition of the press formed part are changed (S51).

For example, in a case where deep drawing of the press formed part is performed by utilization of a press forming die including a die, a punch, and a blank holder, the provisional press forming condition is changed with respect to a change in a blank size, a change in a blank shape, correction of a die shape (radius of a die shoulder part and radius of a punch shoulder part), a blank holder pressure, the lubricating of the blank in contact with the die and the blank holder, and the like. The change in the blank size and the change in the blank shape may be performed, for example, by adjustment of the provisional press forming condition in such a manner as to reduce the blank holder pressure to optimize tension acting on the blank during the press forming and to adjust inflow resistance of a material flow of the blank. In addition, in a shoulder part of a die or a shoulder part of a punch in which the blank is subjected to bending and unbending deformation with the tension being applied thereto, a thickness reduction is rapidly promoted and easily leads to the fracture, and the material flow is influenced. Thus, the radius of the die shoulder part and the radius of the punch shoulder part may be adjusted by changing of a shape of a press forming die. Furthermore, a deep drawing limit may be adjusted by lubricating of the blank that is in contact with the die and the blank holder.

Then, after the provisional press forming condition is changed (S51), a press forming analysis is performed under the changed provisional press forming condition in the press formed part fracture judgment process P3 (S31b). Furthermore, as described above, the fracture judgment parameters are calculated (S33), the fracture judgment parameters are plotted on the three-dimensional coordinates on which the boundary surface of a forming limit is drawn (S35a), and presence or absence of the fracture generation is judged (S35b).

On the other hand, in the press formed part fracture judgment process P3, in a case where the fracture judgment parameters are located below the boundary surface of a forming limit (S35b), it is judged that the there is no fracture generation (S35c). In this case, in the press forming condition adjustment process P5, the provisional press forming condition judged that there is no fracture generation is confirmed as the press forming condition (S53), and the adjustment of the press forming condition is ended (S55).

The adjustment of the press forming condition in the press forming condition adjustment process P5 (change in the provisional press forming condition) is performed until it is judged that no fracture is generated in the entire region of the press formed part in the press formed part fracture judgment process P3.

<<Press formed part manufacturing process>>

In the press formed part manufacturing process P7, the press formed part is manufactured under the press forming condition adjusted in the press forming condition adjustment process P5 in such a manner that it is judged that no fracture is generated in the press formed part fracture judgment process P3.

In the press formed part manufacturing process P7, as illustrated in FIG. 9, the press forming condition judged that there is no fracture generation in the press formed part fracture judgment process P3 is confirmed (S53), and the press formed part is manufactured after the adjustment of the press forming condition is completed (S55).

In order to actually manufacture the press formed part under the press forming condition after the adjustment, setting of a press forming machine, and the like may be changed as follows. For example, in a case where the blank holder pressure is adjusted as the press forming condition, a set value of air pressure of a pneumatic die cushion (auxiliary pressure device) of the press forming machine in a control panel may be changed. In addition, in a case where the shape of the press forming die (radius of the die shoulder part and radius of the punch shoulder part) is adjusted, shape data of the molding die (model) used for the press forming analysis (S31b) is input to a CAD/CAM program linked with a numerically-controlled machine, and is converted into numerical control data (numerical control program) for NC machining. Then, by utilization of the converted numerical control data (numerical control program), a steel material die or a casting metal die model made of expanded polystyrene by a full mold casting method may be machine processed by a numerically-controlled machine. Furthermore, in a case of adjusting lubricating of the blank that is in contact with the die and the blank holder, it is only necessary to change a type of a lubricating oil (increase in a coefficient of viscosity, and addition of an extreme pressure additive), and to insert a polymer film such as a polyethylene film, for example.

As described above, in the press formed part manufacturing method according to the present second embodiment, in the press forming of the metal sheet, the press forming condition is adjusted in such a manner as to control the fracture generation based on the result of the judgment of presence or absence of the fracture generation in consideration of the bending deformation. As a result, it possible to significantly shorten a period during which the press forming condition of the actual press formed part are determined by trial and error. Furthermore, it is possible to manufacture a press formed part while controlling the fracture generation under the press forming condition adjusted as described above.

[Example]

An experiment and an analysis for verifying an action effect of the press forming fracture judgment method and press formed part manufacturing method according to the present invention have been performed, and will be described below.

In the present example, presence or absence of the fracture generation in the press formed part that is press formed by deep drawing was judged based on a boundary surface of a forming limit which surface was created by a forming test in which a test piece of a metal sheet was bulge formed at various bending deformation degrees. Furthermore, in the present example, the press forming condition was adjusted in such a manner as to control the fracture generation based on the result of the judgment of presence or absence of the fracture generation, and a fracture control effect of when a press formed part was manufactured under the adjusted press forming condition was verified.

First, as described in the first embodiment, the test piece 100 of the metal sheet was bulge formed at various bending deformation degrees by using the molding die 111 including the plurality of punches 113 having different curvatures at the tip portions 113a (see FIG. 2). Then, the forming limit of the metal sheet which limit was expressed by the relationship between the bending deformation degree of the bulge-formed test piece 100 and the maximum principal strain and the minimum principal strain of the test piece 100 bulge formed at the bending deformation degree was acquired. As the test piece 100, a steel sheet having a tensile strength of 1470 MPa-grade and a sheet thickness of 1.6 mm was used as a test material.

In the present example, the boundary surface of a forming limit which surface was expressed by the expression (1) described in the first embodiment was acquired as the forming limit. As the values of the coefficients a to d in the expression (1), values illustrated in Table 2 described above were used.

Then, a finite element analysis of a process of press forming a press formed part 120 imitating an automobile component illustrated in FIG. 10 was performed and the presence or absence of the fracture generation in the press formed part 120 was judged.

In the press forming of the press formed part 120, the steel sheet having the tensile strength of 1470 MPa-grade and the sheet thickness of 1.6 mm was used as a blank, similarly to the forming test of acquiring the forming limit described in the first embodiment described above. Furthermore, a forming process of the press formed part 120 was deep drawing, and a blank holder pressure was set within a range of 1 to 10 ton.

Then, by a finite element analysis, the maximum principal strain, the minimum principal strain, and the bending deformation degree were calculated as the fracture judgment parameters for each element used in the finite element analysis of the press formed part 120. In the present example, a case where a value acquired by division of a difference between the maximum principal strain on the outer side of the bending and the maximum principal strain on the inner side of the bending by the sheet thickness was defined as the bending deformation degree was a first invention example, and a case where the maximum principal curvature was defined as the bending deformation degree was a second invention example. For each of the first invention example and the second invention example, an evaluation value of the fracture judgment was calculated for each portion of the press formed part 120. The evaluation value of the fracture judgment was a value acquired by calculation of the limit value of the maximum principal strain from the minimum principal strain and the bending deformation degree of each portion of the press formed part 120 press formed with the blank holder pressure of 10 ton, and division of the maximum principal strain acquired by the finite element analysis by the limit maximum principal strain. Here, a region where the evaluation value of the fracture judgment is less than 1 corresponds to a case where the judgment parameters acquired from the finite element analysis are located below the boundary surface of a forming limit, and it is judged that there is no fracture generation. In addition, a region where the evaluation value of the fracture judgment is equal to or larger than 1 corresponds to a case where the judgment parameters acquired from the finite element analysis are not located below the boundary surface of a forming limit, and it is judged that there is the fracture generation.

Furthermore, as a comparison object, presence or absence of fracture generation was judged based on a maximum principal strain and a minimum principal strain without consideration of a bending deformation degree (conventional example). Then, an evaluation value of the fracture judgment was acquired for each portion of a press formed part 120 of the conventional example. The evaluation value of the fracture judgment in the conventional example was a value acquired by calculation of a limit value of the maximum principal strain from the minimum principal strain of each portion of a press formed part that was press formed with a blank holder pressure of 10 ton, and division of the maximum principal strain acquired by a finite element analysis by the limit maximum principal strain.

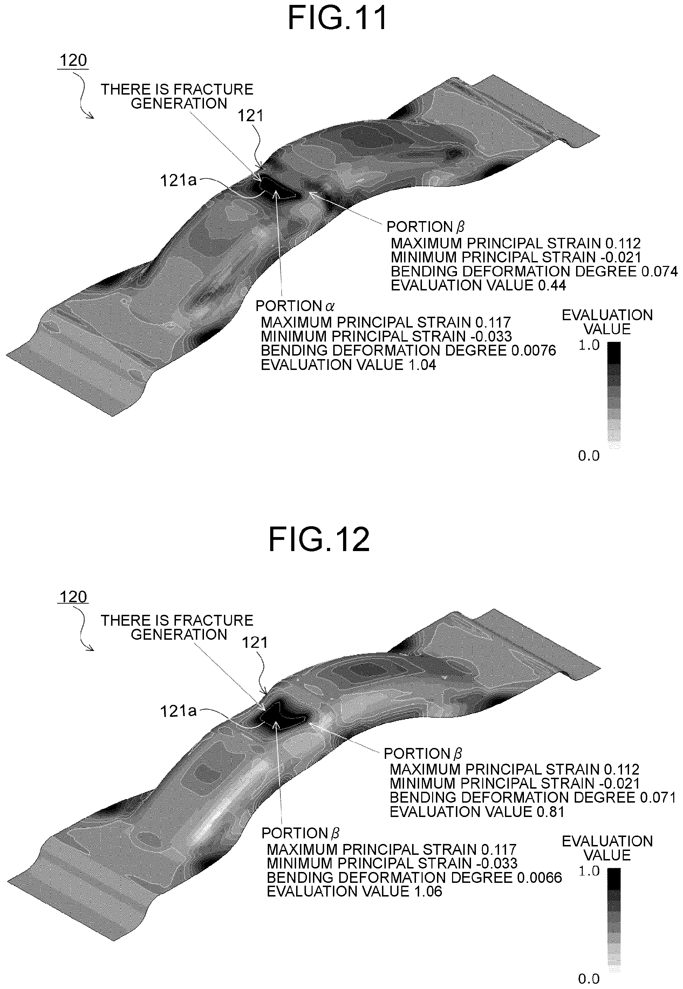

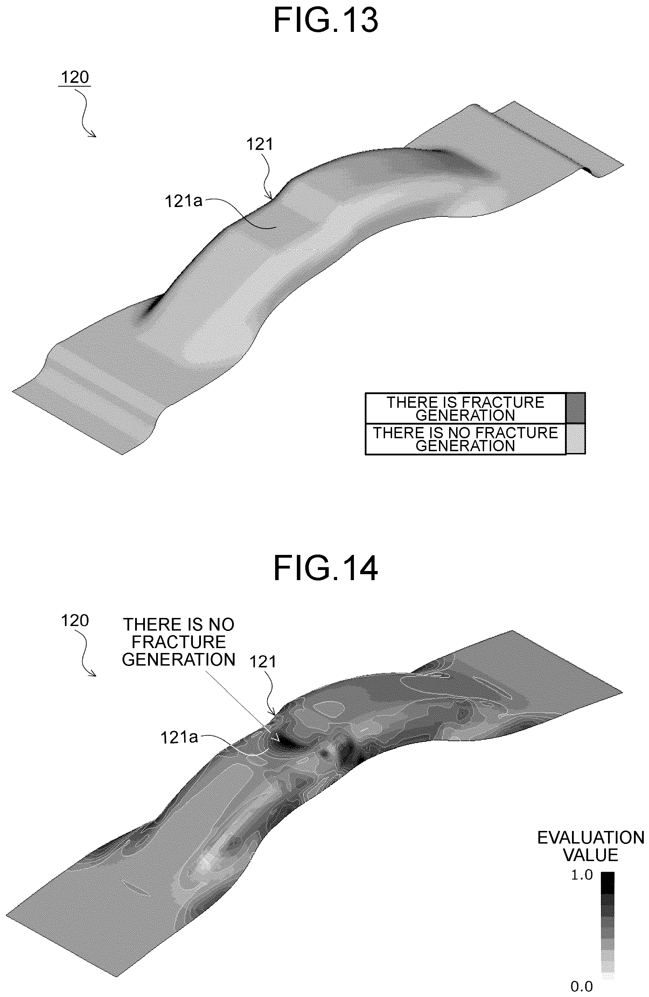

A contour view of evaluation values of the fracture judgment in the first invention example is illustrated in FIG. 11, and a contour view of evaluation values of the fracture judgment in the second invention example is illustrated in FIG. 12. In addition, a contour view of the fracture judgment in the conventional example is illustrated in FIG. 13. FIG. 13 is a contour view illustrating a region where the evaluation value of the fracture judgment is equal to or larger than 1 as a region with the fracture generation, and a region where the evaluation value is less than 1 as a region without the fracture generation.

As illustrated in FIG. 11 and FIG. 12, in the first invention example and the second invention example, the evaluation values were 1.04 and 1.06 in a portion $\alpha$ that is a flat portion 121a of a punch bottom portion 121 of the press formed part 120. Thus, since the evaluation value was 1 or more, it was judged that the fracture was generated at the portion $\alpha$. In addition, since the evaluation value was less than 1, it was judged that no fracture was generated in other portions (such as a portion $\beta$) of the press formed part 120. On the other hand, as illustrated in FIG. 13, in the conventional example, since the evaluation value was less than 1 in the entire press formed part 120, it was judged that there was no fracture generation, and the judgment result was different from those of first invention example 1 and the second invention example.

In the press forming of the actual press formed part 120, the fracture was generated in the flat portion 121a of the punch bottom portion 121, and no fracture was generated in other portions. From the above, it has been found that presence or absence of the fracture generation can be judged well in the first invention example and the second invention example.

As described above, according to the press forming fracture judgment method according to the present invention, it has been shown that presence or absence of the fracture generation in the press formed part can be accurately judged in consideration of the influence of the bending deformation degree that has not been considered in the conventional forming limit curve.

Next, based on the fracture parameters judged as illustrated in FIG. 11 and FIG. 12, the blank holder pressure by the blank holder was changed from 10 tonf to 1 tonf in such a manner as not to generate the fracture in the manufacturing of the press formed part 120 by deep drawing. Then, the finite element analysis was performed under the press forming condition in which the blank holder pressure was changed, and the fracture judgment parameters were calculated for the press formed part 120. FIG. 14 and FIG. 15 are contour views in which the evaluation values of the fracture judgment which values were acquired by utilization of the calculated fracture judgment parameters are displayed on the press formed part 120. In FIG. 14, similarly to the first invention example described above, the fracture judgment parameters are calculated with a value acquired by division of the difference between the maximum principal strain on the outer side of the bending and the maximum principal strain on the inner side of the bending in the press formed part 120 by the sheet thickness being the bending deformation degree. On the other hand, in FIG. 15, similarly to the second example described above, the fracture judgment parameters are calculated with the maximum principal curvature of the press formed part 120 being the bending deformation degree.

As illustrated in FIG. 14 and FIG. 15, by changing of the blank holder pressure to 1 tonf, the maximum value of the evaluation values in the flat portion 121a of the press formed part 120 were reduced to less than 1. The evaluation values were not 1 or more in other portions. This indicates that the fracture generation is controlled in the press formed part 120. Furthermore, when the press formed part 120 was actually produced under the press forming condition in which the blank holder pressure was 1 tonf as described above, it was confirmed that the fracture was not generated in the press formed part 120.

As described above, according to the press formed part manufacturing method according to the present invention, it has been shown that it is possible to manufacture the press formed part while controlling the fracture generation by adjusting the press forming condition in such a manner as to control the fracture generation based on the result of the judgment of presence or absence of the fracture generation in consideration of the influence of the bending deformation degree.

Industrial Applicability

The present invention can provide a press forming fracture judgment method, device, and program of judging a forming limit of a press formed part based on a forming limit of a metal sheet which limit is acquired in consideration of an influence of a bending deformation. Furthermore, according to the present invention, it is possible to provide a press formed part manufacturing method of adjusting a press forming condition of a press formed part in such a manner that it is judged that there is no fracture generation by the press forming fracture judgment method, and manufacturing a press formed part under the adjusted press forming condition.

Reference Signs List

1 PRESS FORMING FRACTURE JUDGMENT DEVICE
10 FORMING LIMIT ACQUISITION UNIT
11 BULGE FORMING TEST RESULT CAPTURING UNIT
13 FORMING LIMIT ANALYSIS UNIT
15 BOUNDARY SURFACE OF FORMING LIMIT CREATION UNIT
20 PRESS FORMED PART FRACTURE JUDGMENT UNIT
21 PRESS FORMING FINITE ELEMENT ANALYSIS UNIT
23 PRESS FORMING FRACTURE JUDGMENT PARAMETER CALCULATION UNIT
25 PRESS FORMING FRACTURE GENERATION PRESENCE/ABSENCE JUDGMENT UNIT
100 TEST PIECE
101 TEST PIECE
103 TEST PIECE
103a CUT-OUT PORTION
103b CENTRAL PORTION
111 MOLDING DIE
113 PUNCH
113a TIP PORTION
115 UPPER DIE
117 BLANK HOLDER
120 PRESS FORMED PART
201 MOLDING DIE
203 HEMISPHERICAL PUNCH
203a TIP PORTION
205 UPPER DIE
207 BLANK HOLDER
211 MOLDING DIE
213 FLAT PUNCH
213a TIP PORTION
215 DRIVER SHEET

**Claims**

1.  A press forming fracture judgment method of judging presence or absence of fracture generation in a press formed part acquired by press forming of a metal sheet, the method comprising:

    a forming limit acquisition process; and
    a press formed part fracture judgment process, wherein
    the forming limit acquisition process includes

       forming the metal sheet at various bending deformation degrees, and
       acquiring a forming limit of the metal sheet which limit is expressed by a relationship between a bending deformation degree of the formed metal sheet and a maximum principal strain and a minimum principal strain of the metal sheet formed at the bending deformation degree, and

the press formed part fracture judgment process includes

acquiring, as fracture judgment parameters in the press formed part, a maximum principal strain and a minimum principal strain in the press formed part and a curvature in a maximum principal strain direction as a bending deformation degree in the press formed part, and

judging presence or absence of fracture generation in the press formed part based on the acquired fracture judgment parameters and the forming limit acquired in the forming limit acquisition process.

2. The press forming fracture judgment method according to claim 1, wherein in the press formed part fracture judgment process, the bending deformation degree in the press formed part is calculated by a following expression.

$$\rho = (\varepsilon_{1,\ outer} - \varepsilon_{1,\ inner})/t$$

where

$\rho$: bending deformation degree
$\varepsilon_{1,\ outer}$: maximum principal strain on an outer side of bending
$\varepsilon_{1,\ inner}$: maximum principal strain on an inner side of bending
t: sheet thickness

3. The press forming fracture judgment method according to claim 1, wherein in the press formed part fracture judgment process, the bending deformation degree in the press formed part is set as a maximum principal curvature.

4. The press forming fracture judgment method according to claim 1, wherein the metal sheet in the forming limit acquisition process is collected from a metal material used as a blank of the press formed part in which presence or absence of the fracture generation is judged in the press formed part fracture judgment process.

5. A press forming fracture judgment device for judging presence or absence of fracture generation in a press formed part acquired by press forming of a metal sheet, the device comprising:

a forming limit acquisition unit; and
a press formed part fracture judgment unit, wherein
the forming limit acquisition unit is configured to acquire a forming limit of the metal sheet which limit is expressed by a relationship between a bending deformation degree of the metal sheet formed at various bending deformation degrees and a maximum principal strain and a minimum principal strain of the metal sheet formed at the bending deformation degree, and
the press formed part fracture judgment unit is configured to

calculate, as fracture judgment parameters in the press formed part, a maximum principal strain and a minimum principal strain in the press formed part and a curvature in a maximum principal strain direction as a bending deformation degree in the press formed part, and

judge presence or absence of fracture generation in the press formed part based on the calculated fracture judgment parameters and the forming limit acquired by the forming limit acquisition unit.

6. A press forming fracture judgment program for judging presence or absence of fracture generation in a press formed part acquired by press forming of a metal sheet, the program causing a computer to function as a forming limit acquisition unit, and a press formed part fracture judgment unit, wherein

the forming limit acquisition unit is configured to acquire a forming limit of the metal sheet which limit is expressed by a relationship between a bending deformation degree of the metal sheet formed at various bending deformation degrees and a maximum principal strain and a minimum principal strain of the metal sheet formed at the bending deformation degree, and
the press formed part fracture judgment unit is configured to

calculate, as fracture judgment parameters in the press formed part, a maximum principal strain and a minimum principal strain in the press formed part and a curvature in a maximum principal strain direction as a bending deformation degree in the press formed part, and

judge presence or absence of fracture generation in the press formed part based on the calculated fracture judgment parameters and the forming limit acquired by the forming limit acquisition unit.

7. A press formed part manufacturing method, comprising:

judging presence or absence of fracture generation in a press formed part acquired by press forming of a metal sheet by the press forming fracture judgment method according to any one of claims 1 to 3; and manufacturing a press formed part in which the fracture generation in the press forming is controlled based on a result of the judgment, wherein the press formed part manufacturing method comprises:

a press forming condition adjustment process of adjusting a press forming condition of the press formed part until it is judged that there is no fracture generation in a case where it is judged in the press formed part fracture judgment process of the press forming fracture judgment method that there is the fracture generation, and repeatedly performing the press formed part fracture judgment process; and a press formed part manufacturing process of manufacturing the press formed part under the press forming condition adjusted in the press forming condition adjustment process in such a manner that it is judged that there is no fracture generation in the press formed part fracture judgment process.

8. A press formed part manufacturing method comprising:

judging presence or absence of fracture generation in a press formed part acquired by press forming of a metal sheet by the press forming fracture judgment method according to claim 4; and manufacturing a press formed part in which the fracture generation in the press forming is controlled based on a result of the judgment, wherein the press formed part manufacturing method comprises:

a press forming condition adjustment process of adjusting a press forming condition of the press formed part until it is judged that there is no fracture generation in a case where it is judged in the press formed part fracture judgment process of the press forming fracture judgment method that there is the fracture generation, and repeatedly performing the press formed part fracture judgment process; and a press formed part manufacturing process of manufacturing the press formed part under the press forming condition adjusted in the press forming condition adjustment process in such a manner that it is judged that there is no fracture generation in the press formed part fracture judgment process.

# FIG.1

| FORMING LIMIT ACQUISITION PROCESS | P1 |

| FORMING TEST STEP | S11 |

| FORMING LIMIT ANALYSIS STEP | S13 |

| BOUNDARY SURFACE OF FORMING LIMIT CREATION STEP | S15 |

| PRESS FORMED PART FRACTURE JUDGMENT PROCESS | P3 |

| PRESS FORMING FINITE ELEMENT ANALYSIS STEP | S31 |

| PRESS FORMING FRACTURE JUDGMENT PARAMETER CALCULATION STEP | S33 |

| PRESS FORMING FRACTURE GENERATION PRESENCE/ABSENCE JUDGMENT STEP | S35 |

# FIG.2

111

100

115

117

113a

113

(a) PERSPECTIVE VIEW

111

115

100

113a

115

R

117

φ100mm

117

113

(b) CROSS-SECTIONAL VIEW

# FIG.3

(a)  (b)  (c)

# FIG.4

(a)  (b)  (c)

# FIG.5

# FIG.6

# FIG.7

1

FORMING LIMIT ACQUISITION UNIT — 10

BULGE FORMING TEST RESULT CAPTURING UNIT — 11

FORMING LIMIT ANALYSIS UNIT — 13

BOUNDARY SURFACE OF FORMING LIMIT CREATION UNIT — 15

PRESS FORMED PART FRACTURE JUDGMENT UNIT — 20

PRESS FORMING FINITE ELEMENT ANALYSIS UNIT — 21

PRESS FORMING FRACTURE JUDGMENT PARAMETER CALCULATION UNIT — 23

PRESS FORMING FRACTURE GENERATION PRESENCE/ABSENCE JUDGMENT UNIT — 25

# FIG.8

FORMING LIMIT ACQUISITION PROCESS — P1

↓

PRESS FORMED PART FRACTURE JUDGMENT PROCESS — P3

↓

PRESS FORMING CONDITION ADJUSTMENT PROCESS — P5

↓

PRESS FORMED PART MANUFACTURING PROCESS — P7

# FIG.9

**FORMING LIMIT ACQUISITION PROCESS**

FORMING TEST

S11

EXTRACT FORMING LIMIT STRAIN DATA

S13

APPROXIMATE BOUNDARY SURFACE OF FORMING LIMIT

S15

END CREATION OF BOUNDARY SURFACE OF FORMING LIMIT

S17

P1

**PRESS FORMED PART FRACTURE JUDGMENT PROCESS**    P3

SET PROVISIONAL PRESS FORMING CONDITION

S31a

ANALYZE PRESS FORMING

S31b

CALCULATE FRACTURE JUDGMENT PARAMETER

S33

PLOT FRACTURE JUDGMENT PARAMETER ON THREE-DIMENSIONAL COORDINATE IN WHICH BOUNDARY SURFACE OF FORMING LIMIT IS DRAWN

S35a

IS FRACTURE JUDGMENT PARAMETER LOWER THAN BOUNDARY SURFACE OF FORMING LIMIT?

YES         NO   S35b

THERE IS NO FRACTURE GENERATION

THERE IS FRACTURE GENERATION

S35c         S35d

**PRESS FORMING CONDITION ADJUSTMENT PROCESS**

CHANGE PROVISIONAL PRESS FORMING CONDITION

S51

CONFIRM PRESS FORMING CONDITION

S53

END ADJUSTMENT OF PRESS FORMING CONDITION

S55

P5

PRESS FORMED PART MANUFACTURING PROCESS

P7

# FIG.10

120

121

121a

## FIG.11

120

THERE IS FRACTURE
GENERATION
121

121a

PORTION $\beta$
MAXIMUM PRINCIPAL STRAIN 0.112
MINIMUM PRINCIPAL STRAIN -0.021
BENDING DEFORMATION DEGREE 0.074
EVALUATION VALUE 0.44

PORTION $\alpha$
MAXIMUM PRINCIPAL STRAIN 0.117
MINIMUM PRINCIPAL STRAIN -0.033
BENDING DEFORMATION DEGREE 0.0076
EVALUATION VALUE 1.04

EVALUATION
VALUE
1.0

0.0

## FIG.12

120

THERE IS FRACTURE
GENERATION
121

121a

PORTION $\beta$
MAXIMUM PRINCIPAL STRAIN 0.112
MINIMUM PRINCIPAL STRAIN -0.021
BENDING DEFORMATION DEGREE 0.071
EVALUATION VALUE 0.81

PORTION $\beta$
MAXIMUM PRINCIPAL STRAIN 0.117
MINIMUM PRINCIPAL STRAIN -0.033
BENDING DEFORMATION DEGREE 0.0066
EVALUATION VALUE 1.06

EVALUATION
VALUE
1.0

0.0

# FIG.13

120

121

121a

| THERE IS FRACTURE GENERATION | |
|---|---|
| THERE IS NO FRACTURE GENERATION | |

# FIG.14

120

THERE IS NO FRACTURE GENERATION 121

121a

EVALUATION VALUE

1.0

0.0

# FIG.15

120

THERE IS NO
FRACTURE
GENERATION 121

121a

EVALUATION
VALUE

1.0

0.0

# FIG.16

(a) NAKAJIMA TEST

203a 100    201

205       205

207       207

203

(b) MARCINIAK TEST

100 213a    211

205       205

215    215
207       207

213

(c) FORMING LIMIT DIAGRAM

MAXIMUM PRINCIPAL STRAIN

FORMING
LIMIT CURVE
OF NAKAJIMA
TEST

FORMING LIMIT
CURVE OF
MARCINIAK TEST

MINIMUM PRINCIPAL STRAIN

## INTERNATIONAL SEARCH REPORT

International application No.

**PCT/JP2023/030150**

| A. | CLASSIFICATION OF SUBJECT MATTER |
|---|---|

*B21D 22/00*(2006.01)i; *G01N 3/00*(2006.01)i; *G06F 30/10*(2020.01)i; *G06F 30/20*(2020.01)i; *G06F 30/23*(2020.01)i; *G06F 113/22*(2020.01)n
FI: B21D22/00; G01N3/00; G06F30/10 100; G06F30/20; G06F30/23; G06F113:22

According to International Patent Classification (IPC) or to both national classification and IPC

| B. | FIELDS SEARCHED |
|---|---|

Minimum documentation searched (classification system followed by classification symbols)

B21D22/00; G01N3/00; G06F30/10; G06F30/20; G06F30/23; G06F113/22

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2012-166251 A (JFE STEEL CORP) 06 September 2012 (2012-09-06)<br>entire text, all drawings | 1-8 |
| A | JP 2011-141237 A (NIPPON STEEL CORP) 21 July 2011 (2011-07-21)<br>entire text, all drawings | 1-8 |
| A | JP 2019-104051 A (KEYLEX CORP) 27 June 2019 (2019-06-27)<br>entire text, all drawings | 1-8 |
| A | JP 2012-33039 A (NIPPON STEEL CORP) 16 February 2012 (2012-02-16)<br>entire text, all drawings | 1-8 |
| A | JP 2017-109227 A (NISSHIN STEEL CO LTD) 22 June 2017 (2017-06-22)<br>entire text, all drawings | 1-8 |
| A | アルミニウム合金板の成形限界線図, 軽金属, 08 April 2020 (accession date), vol. 70, no. 10, 490-496<br>entire text, all drawings, (Forming limit diagram of aluminum alloy sheets. Journal of Japan Institute of Light Metals.) | 1-8 |

| ✓ | Further documents are listed in the continuation of Box C. | ✓ | See patent family annex. |
|---|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 November 2023** | **14 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2023/030150** |

**C.  DOCUMENTS CONSIDERED TO BE RELEVANT**

| Category* | Citation of document, with indication, where appropriate, of the relevant passages | Relevant to claim No. |
| --- | --- | --- |
| P, X | JP 7327595 B1 (JFE STEEL CORP) 16 August 2023 (2023-08-16)<br>entire text, all drawings | 1-8 |

Form PCT/ISA/210 (second sheet) (January 2015)

**INTERNATIONAL SEARCH REPORT**
Information on patent family members

International application No.

**PCT/JP2023/030150**

| Patent document cited in search report | | | Publication date (day/month/year) | Patent family member(s) | Publication date (day/month/year) |
|---|---|---|---|---|---|
| JP | 2012-166251 | A | 06 September 2012 | (Family: none) | |
| JP | 2011-141237 | A | 21 July 2011 | (Family: none) | |
| JP | 2019-104051 | A | 27 June 2019 | (Family: none) | |
| JP | 2012-33039 | A | 16 February 2012 | (Family: none) | |
| JP | 2017-109227 | A | 22 June 2017 | (Family: none) | |
| JP | 7327595 | B1 | 16 August 2023 | (Family: none) | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Metallic materials-Sheet and strip-Determination of forming-limit curves. *ISO 12004-2: 2008*, 2008

- **W HOTZ** ; **M MERKLEIN et al.** Time Dependent FLC Determination Comparison of Different Algorithms to Detect the Onset of Unstable Necking before Fracture. *Key Engineering Materials*, 2013, vol. 549, 397-404